(19) Europäisches Patentamt / European Patent Office / Office européen des brevets

(11) EP 2 687 909 B1

(12) EUROPEAN PATENT SPECIFICATION

(45) Date of publication and mention
of the grant of the patent:
16.10.2019 Bulletin 2019/42

(51) Int Cl.:
G03G 15/00 $^{(2006.01)}$    G03G 15/01 $^{(2006.01)}$

(21) Application number: 13167710.6

(22) Date of filing: 14.05.2013

(54) **Image forming apparatus**

Bilderzeugungsvorrichtung

Appareil de formation d'images

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 08.06.2012 JP 2012131297

(43) Date of publication of application:
22.01.2014 Bulletin 2014/04

(73) Proprietor: Canon Kabushiki Kaisha
Tokyo 146-8501 (JP)

(72) Inventor: Watanabe, Shinri
Tokyo 146-8501 (JP)

(74) Representative: Williamson, Brian
Canon Europe Limited
European Patent Department
3 The Square
Stockley Park
Uxbridge, Middlesex UB11 1ET (GB)

(56) References cited:
EP-A2- 2 388 652        KR-A- 20090 031 301
US-A1- 2011 280 633

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to an image forming apparatus such as a color laser printer, a color copying machine, or a color facsimile machine that mainly employs an electrophotographic process, and more particularly to alignment control of each color developer image formed on an image bearing member.

Description of the Related Art

Conventionally, in a color image forming apparatus including a plurality of photosensitive drums, positional deviation occurs between color images due to mechanical mounting error of the photosensitive drum, an optical path length error of each laser beam, or an optical path change. Thus, a method has been proposed to correct the positional deviation between the color images, in which a positional deviation correction pattern is produced on an intermediate transfer belt and the amount of position deviation (hereinafter referred to as " a positional deviation amount") between the color images is corrected by detecting the position of the positional deviation correction pattern.

Japanese Patent Application Laid-Open No. 2009-93155 discusses a detection method that uses a sensor for detecting the positional deviation correction pattern using a diffused light reflected from the deviation correction pattern.

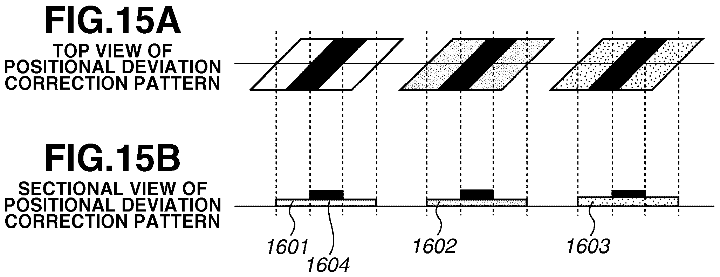

When the positional deviation correction pattern is detected using diffused reflected light, an output value of diffused reflected light from a black developer formed on the intermediate transfer belt is reduced almost equally to that of the diffused reflection light from the intermediate transfer belt. Accordingly, as illustrated in Figs. 15A and 15B, the positional deviation correction pattern is a pattern formed by using a pattern of a color developer as a base and superposing a pattern of black developer on the color developer.

In the examples shown in Figs. 15A and 15B, black developer patterns 1604 are respectively superposed on a yellow developer pattern 1601, a magenta developer pattern 1602, and a cyan developer pattern 1603. Accordingly, the black developer pattern having limited diffused reflection light can be detected.

Japanese Patent Application Laid-Open No. 2007-272111 discusses a density increase that occurs at an image trailing edge during image formation in an electrophotographic process. Hereinafter, the occurrence of a density increase at the image trailing edge will be referred to as "sweeping".

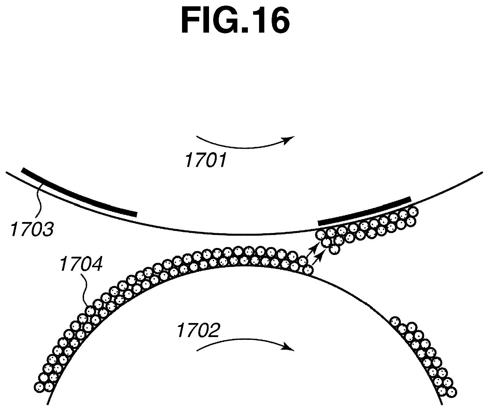

Referring to Fig. 16, the mechanism by which sweeping occurs at the image trailing edge will be described. The amount of developed developer increases at a boundary on the downstream side of a latent image region 1703 on a photosensitive drum 1701. That is, at the boundary on the downstream side of a latent image region 1703, developer 1704 stuck to a developing roller 1702 facing the latent image region 1703 and a region on the downstream side of the facing position flies to the latent image region 1703 side with a low potential.

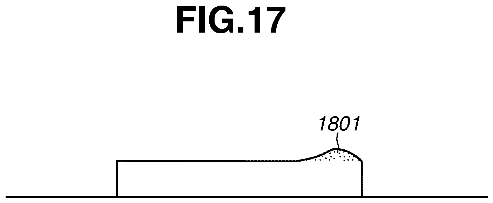

Thus, the amount of developer flying to the rotational-direction downstream side of the photosensitive drum 1701 is larger than that of developer in the latent image region 1703 other than the boundary on the downstream side, causing a sweeping phenomenon where the density of at the image trailing edge increases as illustrated in Fig. 17.

To reduce the sweeping amount, Japanese Patent Application Laid-Open No. 2007-272111 discusses a technique for extracting contour information from image information and setting, based on the extracted contour information, an image density of a region where sweeping is supposed to occur to be lower than that of original image data.

Such sweeping also occurs when a positional deviation correction pattern is formed on the intermediate transfer belt. When the sensor detects the positional deviation correction pattern where sweeping has occurred, the trailing edge of the positional deviation correction pattern cannot be correctly detected. Thus sweeping can cause errors in the detection of positional deviation.

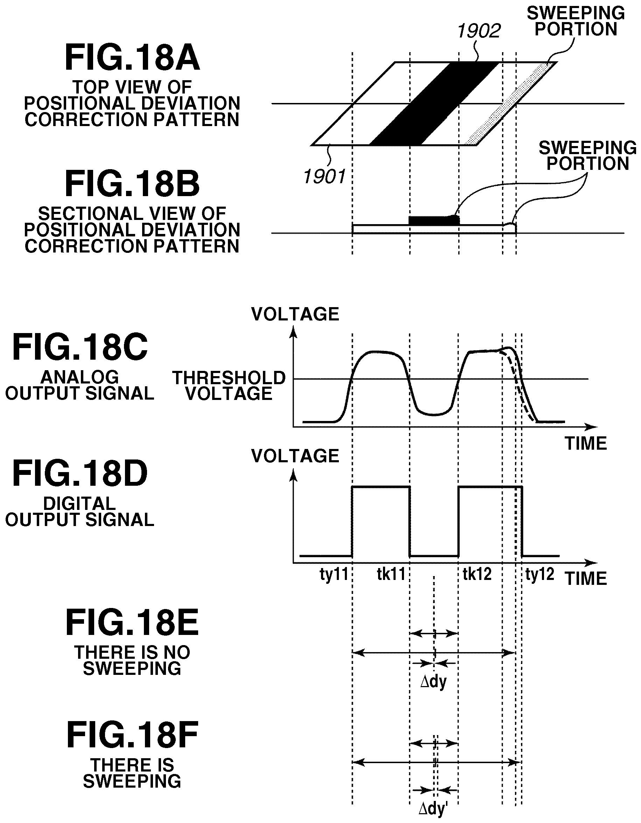

For example, when a sensor configured to detect the positional deviation amount by using diffused reflected light is used, as illustrated in Fig. 18A, a positional deviation correction pattern is formed where a black developer pattern 1902 is superposed on a color development pattern 1901 as a base.

In this case, as illustrated in Fig. 18B, because of the influence of sweeping occurring at a pattern trailing edge, the deposition amount of developer at the pattern trailing edge increases to form a highly dense portion. Accordingly, as illustrated in Fig. 18C, in an analog output signal from a detection sensor, indicating a measure of the intensity of the diffused reflected light, the intensity of the trailing edge of a color developer pattern is higher than other positions on the pattern.

In the case of the black developer pattern, similar sweeping occurs at a pattern trailing edge. However, light is absorbed by the black developer itself reducing the amount of diffused reflected light from the developer. Thus, in an output value when the black developer pattern is detected by the sensor, the influence of sweeping is reduced.

The analog output signal from the sensor is binarized with a predetermined threshold value, and a positional deviation amount is calculated based on the timings of a rising edge and a falling edge of the binarized digital output signal. Specifically, as illustrated in Fig. 18D, the center position of the color developer pattern 1901 is calculated based on the timing ty 11 of the detection of the rising edge and the timing ty12 of the detection of the falling edge of the digital output signal.

Similarly, the center position of the black developer pattern is calculated based on the timing tk11 of the detection of the rising edge and the timing tk12 of the detection of the falling edge of the digital output signal. Then, a difference "$\Delta$ dy" between the center position of the color developer pattern and the center position of the black developer pattern is calculated as a relative positional deviation amount between the color developer pattern and the black developer pattern.

When no sweeping occurs, the analog signal output from the sensor and the digital output signal binarized with the threshold value are as indicated by broken lines illustrated in Figs. 18C and 18D. Thus, for example, when there is no positional deviation between the color developer pattern and the black developer pattern, as illustrated in Fig. 18E, a positional deviation amount $\Delta$ dy is "0" ($\Delta$ dy = 0).

However, when sweeping occurs, a highly dense portion is formed at the pattern trailing edge due to the sweeping. Thus, the analog signal output from the sensor and the digital output signal binarized with the threshold value are as indicated by solid lines illustrated in Figs. 18C and 18D.

Thus, for example, even when there is no positional deviation between the color developer pattern and the black developer pattern, as illustrated in Fig. 18F, a positional deviation amount $\Delta$ dy' is not "0" (i. e. $\Delta$ dy' # 0), and erroneously detected as a positional deviation amount.

For example, the influence of the sweeping may be reduced by changing the setting of the image density as in the case of the technique discussed in Japanese Patent Application Laid-Open No. 2007-272111. However, this takes time and labor because one must predict how much sweeping occurs and a positional deviation detection pattern must be formed where the density is lowered accordingly.

When the influence of sweeping is not sufficiently reduced by prediction, the positional deviation amount $\Delta$ dy' is not "0" ($\Delta$ dy' # 0), and erroneously detected as a positional deviation amount.

Thus, when sweeping occurs during the formation of the conventional positional deviation correction pattern, an error occurs in the positional deviation amounts between the respective color images of the positional deviation correction patterns formed on the intermediate transfer belt. As a result, there is a problem in that when positional deviation is corrected, based on the output result of the sensor, correction accuracy is reduced due to the influence of the sweeping.

EP 2388 652 discloses an image forming apparatus as claimed in the pre-characterizing portion of claim 1 herein.

## SUMMARY OF THE INVENTION

The present invention is directed to an image forming apparatus using a plurality of developers and capable of correcting positional deviation between color images formed on an image bearing member by suppressing the influence of sweeping to reduce accuracy.

According to an aspect of the present invention, there is provided an image forming apparatus as specified in claims 1 to 9.

Further features of the present invention will become apparent from the following description of embodiments with reference to the attached drawings.

## BRIEF DESCRIPTION OF THE DRAWINGS

Fig. 1 is a schematic sectional diagram illustrating a configuration of a color laser printer that is an image forming apparatus.
Fig. 2 is a schematic diagram illustrating a configuration of a sensor unit.
Fig. 3 is a diagram illustrating a driving circuit of the sensor unit.
Figs. 4A and 4B are diagrams illustrating a configuration example of one set of positional deviation correction patterns according to a first embodiment.
Fig. 5 is a development diagram illustrating an arrangement example of positional deviation correction patterns formed on an endless intermediate transfer belt.
Figs. 6A to 6D are diagrams illustrating examples of an analog output signal waveform and a digital output signal when the positional deviation correction patterns are detected by a sensor according to a first exemplary embodiment.
Figs. 7A to 7D are diagrams illustrating a state where a black developer pattern is positionally shifted from a color developer pattern to the trailing edge side of a pattern forming direction according to the first embodiment.
Figs. 8A to 8D are diagrams illustrating a state where the black developer pattern is positionally shifted from the color developer pattern to the leading edge side of the pattern forming direction according to the first embodiment.

Figs. 9A to 9c are diagrams illustrating examples of an analog output signal waveform and a digital output signal when the positional deviation correction patterns are detected by the sensor according to the first embodiment.

Figs. 10A and 10B are diagrams illustrating a configuration example of one set of positional deviation correction patterns according to a second embodiment.

Figs. 11A to 11D are diagrams illustrating examples of an analog output signal waveform and a digital output signal when the positional deviation correction patterns are detected by a sensor according to the second embodiment.

Figs. 12A to 12D are diagrams illustrating a state where a black developer pattern is positionally shifted from a color developer pattern to the trailing edge side of a pattern forming direction according to the second embodiment.

Figs. 13A to 13D are diagrams illustrating a state where the black developer pattern is positionally shifted from the color developer pattern to the leading edge side of the pattern forming direction according to the second embodiment.

Figs. 14A to 14c are diagrams illustrating examples of an analog output signal waveform and a digital output signal when the positional deviation correction patterns are detected by the sensor according to the second embodiment.

Figs. 15A and 15B are diagrams illustrating conventional positional deviation correction patterns.

Fig. 16 is a diagram illustrating a mechanism of a sweeping occurrence.

Fig. 17 is a diagram illustrating sweeping occurring at an image trailing edge.

Figs. 18A to 18F are diagrams illustrating examples of an analog output signal waveform and a digital output signal when the conventional positional deviation correction patterns are detected by a sensor.

## DESCRIPTION OF THE EMBODIMENTS

Various embodiments, features, and aspects of the invention will be described in detail below with reference to the drawings. Each of the embodiments of the present invention described below can be implemented solely or as a combination of a plurality of the embodiments or features thereof where necessary or where the combination of elements or features from individual embodiments in a single embodiment is beneficial.

The embodiments described below are in no way limitative of the present invention according to the appended claims. Not all the combinations of the features of the embodiments are essential to the present invention.

<Image Forming Apparatus>

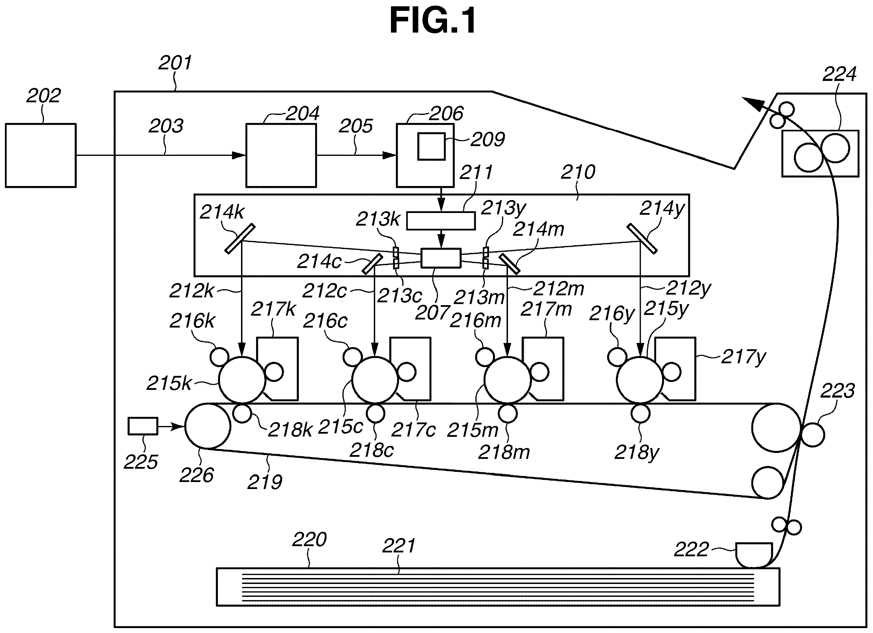

Fig. 1 is a schematic sectional diagram illustrating a configuration of a color laser printer 201 that is an image forming apparatus according to an embodiment of the present invention. The image forming apparatus according to the present embodiment includes four-color image forming units to form a full-color image by combining four color images (Y: yellow, M: magenta, C: cyan, and Bk: black). Developer images formed by the yellow, magenta, and the cyan developers are referred to as color developer images, and a developer image formed by the black developer is referred to as a black developer image.

The color laser printer 201, which has received image data 203 from a host computer 202, rasterizes the image data into video signal data by a print image generation unit 204 to generate a video signal 205 for image formation. A control unit 206, which includes a calculation unit such as a central processing unit (CPU) 209, receives the video signal 205 generated by the print image generation unit 204, and drives a plurality of laser diodes 211 provided in a scanner unit 210 as laser light emitting elements according to the video signal.

Laser beams 212y, 212m, 212c, and 212k (hereinbelow, referred to as laser beam 212) emitted from the laser diodes 211 are respectively applied to photosensitive drums 215y, 215m, 215c, and 215k (hereinbelow, referred to as photosensitive drum 215) via a polygon mirror 207, lenses 213y, 213m, 213c, and 213k (hereinbelow, referred to as lens 213), and folding mirrors 214y, 214m, 214c, and 214k (hereinbelow, referred to as folding mirror 214) .

The photosensitive drums 215y, 215m, 215c, and 215k as a plurality of image bearing members are respectively charged by charging units 216y, 216m, 216c, and 216k (hereinbelow, referred to as charging unit 216).

The laser beam 212 is applied to the photosensitive drum 215 to partially lower its surface potential, and accordingly an electrostatic latent image is formed on a surface of the photosensitive drum 215. In the electrostatic latent image formed on the photosensitive drum 215 by the application of the laser beam 212, toner images (hereinbelow, referred to as developer images) are formed by developing units 217y, 217m, 217c, and 217k (hereinbelow, referred to as developing unit 217) according to the electrostatic latent image.

As described above, the image forming apparatus 201 includes image forming units for forming toner images of different colors on the photosensitive drums 215. The toner images formed on the photosensitive drums 215 are primarily transferred to an intermediate transfer belt 219 serving as a transfer medium by applying bias voltages to primary transfer members 218y, 218m, 218c, and 218k (hereinbelow, primary transfer member 218). The intermediate transfer belt 219 is an intermediate transfer member including a rotational endless belt.

First, a yellow image is primarily transferred to the intermediate transfer belt 219, and a magenta image, a cyan image, and a black image are sequentially transferred thereon to form a color image where toner images of a plurality of colors are superposed. Thus, the image forming apparatus 201 includes the primary transfer members 218 that are transfer units to sequentially transfer the toner images formed on the photosensitive drums 215 to the intermediate transfer belt 219 as the intermediate transfer member.

The intermediate transfer belt 219 is driven by an intermediate transfer belt driving roller 226. A recording material 221 in a cassette 220 is picked up by a feed roller 222, and conveyed to a secondary transfer unit to be synchronized with the image primarily transferred onto the intermediate transfer belt 219. Then, the secondary transfer unit carries out secondary transfer by a secondary transfer roller 223. Thus, the toner image is transferred to the recording material 221.

On the recording material 221 to which the toner image has been secondarily transferred, by a fixing unit 224, the toner image is thermally fixed by applying heat and pressure, and then discharged to a sheet discharge unit at the upper part of the image forming unit. A sensor unit 225 detects a positional deviation correction pattern for detecting a positional shifting amount between the color images transferred to the intermediate transfer belt 219.

The sensor unit 225 detects reflected light when light is applied to a positional deviation correction pattern of each color formed on the intermediate transfer belt 219, and transmits a detection result to the control unit 206. The control unit 206 calculates a position of the positional deviation correction pattern formed on the intermediate transfer belt 219 based on the detection result by the sensor unit 225, and corrects the positional deviations between the color images based on the calculated position of the positional deviation correction pattern of each color.

The transfer medium has been described as the intermediate transfer belt 219 as an example. However, the present invention is not limited thereto. The transfer medium can be a photosensitive drum, a recording material, or a conveyance belt for suctioning and conveying the recording material. Positional deviation detection can be carried out by detecting a correction pattern formed thereon.

<Configuration of Sensor Unit>

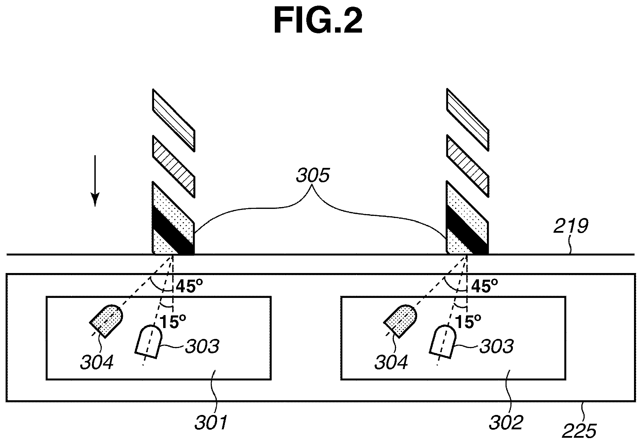

Fig. 2 is a schematic diagram illustrating a configuration of the sensor unit 225. The sensor unit 225 includes optical sensors 301 and 302. By arranging the optical sensors 301 and 302 in a direction orthogonal to a conveyance direction (arrow direction illustrated in Fig. 2) of the intermediate transfer belt 219, positional deviation detection of an image in a main scanning direction and positional deviation detection in a sub-scanning direction are carried out.

The optical sensors 301 and 302 detect diffused reflection light reflected from the intermediate transfer belt 219 and a positional deviation correction pattern 305. Each of the optical sensors 301 and 302 includes a light emitting element 303 and a light receiving element 304. The light emitting element 303 is disposed to emit infrared light at an angle of 15° to a vertical line direction of a belt surface of the intermediate transfer belt 219.

The light receiving element 304 is disposed at a light receiving angle of 45° with respect to the vertical line direction of the belt surface of the intermediate transfer belt 219 to detect the diffused reflection light reflected from the intermediate transfer belt 219 and the positional deviation correction pattern 305. The infrared light emitted from the light emitting element 303 is applied to the intermediate transfer belt 219 and the positional deviation correction pattern 305 of each color on the intermediate transfer belt 219. The light receiving element 304 receives the diffused reflection light of the infrared light from the intermediate transfer belt 219 and the positional deviation correction pattern on the intermediate transfer belt 219.

In the above-described example, the angle of the light emitting element 303 is 15°, and the angle of the light receiving element 304 is 45°. However, the angles are not limited thereto. Slight deviation is allowed from these angles according to positional deviation correction accuracy to be acquired. The light emitted from the light emitting element 303 is the infrared light. However, the light is not limited thereto. In other words, detection can be carried out by using color light other than the infrared light according to positional deviation correction accuracy to be acquired.

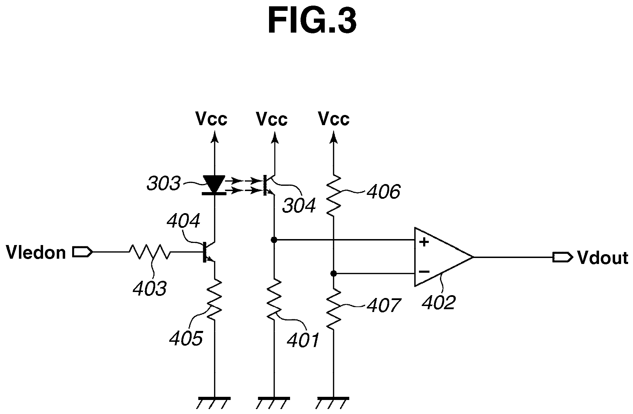

Fig. 3 is a diagram illustrating a driving circuit of the sensor unit 225. The light emitting element 303 is controlled to be lit according to a light emitting element driving signal Vledon from the control unit 206. By the light emitting element driving signal Vledon, a switching element 404 such as a transistor is driven via a base resistor 405. Current flowing through the light emitting element 303 is controlled by a current limitation resistor 305, and accordingly emission control of the light emitting element 303 is carried out.

The light receiving element 304 receives the diffused reflection light reflected from the intermediate transfer belt 219 and the positional shifting correction pattern, and the current corresponding to the received diffused reflection light amount flows through a resistor 401. Thus, a detection value of the diffused reflection light amount is output as an analog output signal.

An analog output signal voltage indicating the detection value of the diffused reflection light amount is compared with a predetermined threshold value, which is determined by voltage dividing resistors 406 and 407, by a comparator 402, and thus the analog output signal is converted into a digital output signal Vdout. The control unit 206 time-sequentially captures the digital output signal Vdout, detects rising edge and falling edge timings of the digital output signal Vdout, and sequentially stores edge capturing timings in a storage device (not illustrated).

<Positional Deviation Correction Pattern>

Next, a configuration of a positional deviation correction pattern, an outline of a positional deviation correction pattern formed on the intermediate transfer belt 219 when positional deviation correction control is carried out, and a positional deviation correction method according to the present embodiment will be described.

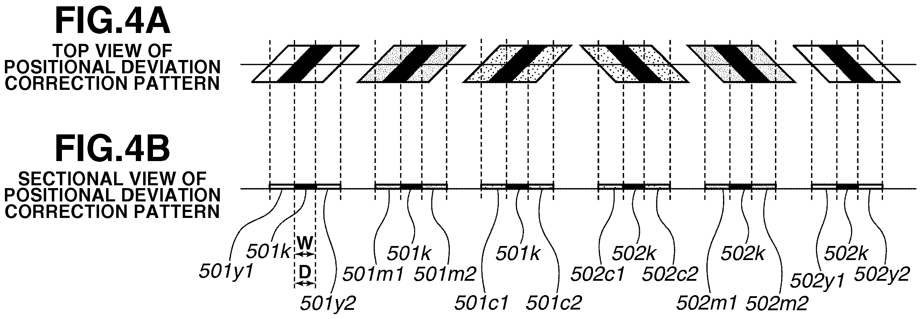

Figs. 4A and 4B are diagrams illustrating a configuration example of positional deviation correction patterns according to the present embodiment. Figs. 4A and 4B do not illustrate any sweeping.

The positional deviation correction pattern includes yellow developer patterns 501y1, 501y2, 502y1, and 502y2, magenta developer patterns 501m1, 501m2, 502m1, and 502m2, cyan developer patterns 501c1, 501c2, 502c1, and 502c2, and black developer patterns 501k and 502k.

As illustrated in Figs. 4A and 4B, the positional deviation correction pattern is formed by reversing the downstream side patterns 502y1, 502y2, 502m1, 502m2, 502c1, 502c2, and 502k of respective colors formed on the downstream side in the conveyance direction with respect to the upstream side patterns 501y1, 501y2, 501m1, 501m2, 501c1, 501c2, and 501k of respective colors formed on the upstream side of the conveyance direction.

In the present embodiment, the patterns formed by the four color developers illustrated in Figs. 4A and 4B are defined as one set of positional deviation correction patterns. Detecting a positional deviation amount between the color images of one set of positional deviation correction patterns by the sensor unit 225 enables detection of positional deviation amounts of the respective color patterns in the main scanning direction and the sub-scanning direction.

The positional deviation correction pattern according to the present embodiment is formed not by superposing one black developer pattern on one color developer pattern as in the conventional case but by adjacently forming one black developer pattern between two color developer patterns of the same colors.

Specifically, the black developer pattern 501k is formed between the yellow developer patterns 501y1 and 501y2. Similarly, the black developer pattern 501k is formed between the magenta developer patterns 501m1 and 501m2, and also between the cyan developer patterns 501c1 and 501c2.

Similarly, the black developer pattern 502k is formed between the cyan developer patterns 502c1 and 502c2, between the magenta developer patterns 502m1 and 502m2, and also between the yellow developer patterns 502y1 and 502y2.

A pattern width W of the black developer pattern is equal to a gap interval D from, among the color developer patterns sandwiching the black developer pattern, the trailing edge of the first pattern 501y1 to the leading edge of the second pattern 501y2.

If the black developer pattern width W is equal to the gap interval D, whatever value the width is, when positional deviation occurs, the color developer pattern and the black developer pattern are superposed on each other. However, it is not limited thereto, and for example, the pattern width W of the black developer pattern can be roughly equal to the gap interval D between the first pattern and the second pattern of the color developer pattern, i.e., different by about $\pm$ 200 $\mu$m from the gap interval D, as a range permitted by positional deviation detection accuracy when positional deviation occurs.

In other words, the pattern width W of the black developer pattern does not need to be completely equal to the gap interval D between the two color developer patterns as long as one black developer pattern is superposed on one or both of two adjacent color developer patterns when color deviation occurs.

Further, a relationship between the pattern width W and the gap interval D is determined so that when color deviation occurs to cause the black developer pattern to be superposed on the color developer pattern on the upstream side of the conveyance direction, the width of sweeping occurring in the color developer pattern may be larger than a superposed width.

The example of the first pattern 501y1 and the second pattern 501y2 has been described above. However, the present invention is not limited thereto. For example, a similar relationship between the pattern width W and the gap interval D is established in any color combinations of magenta developer patterns 501m1 and 501m2, cyan developer patterns 501c1 and 501c2, yellow developer patterns 501y1 and 502y2, magenta developer patterns 502m1 and 502m2, and cyan developer patterns 502c1 and 502c2.

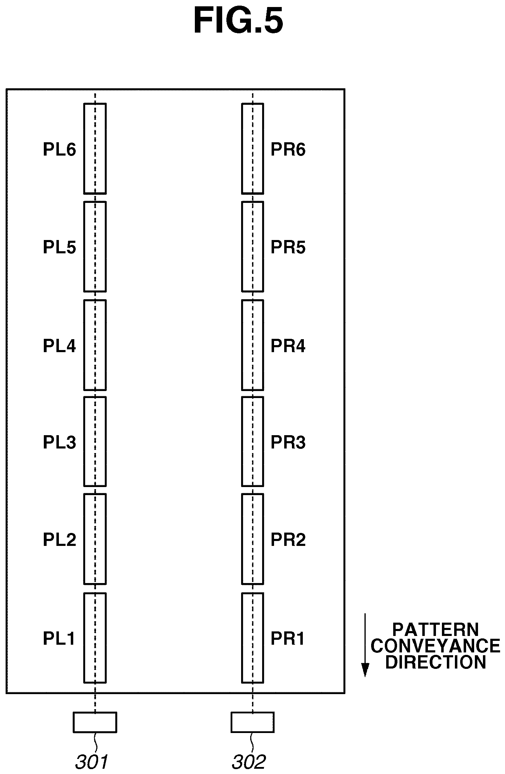

Fig. 5 is a development diagram illustrating an arrangement example of positional deviation correction patterns formed on the endless intermediate transfer belt 219. In Fig. 5, each of positional deviation correction patterns PL1 to PL6 and PR1 to PR6 corresponds to one set of the positional deviation correction patterns illustrated in Figs. 4A and 4B.

In the example illustrated in Fig. 5, totally 12 sets of positional deviation correction patterns are formed around the intermediate transfer belt 219: 6 sets (PL1 to PL6) for detection by the sensor 301 and 6 sets (PR1 to PR6) for detection by the sensor 302.

Accordingly, periodic unevenness of the photosensitive drums 215 and periodic unevenness of the intermediate transfer belt 219 can be canceled. The positional deviation correction patterns formed on the intermediate transfer belt 219 and conveyed in an arrow direction are sequentially detected by the sensors 301 and 302.

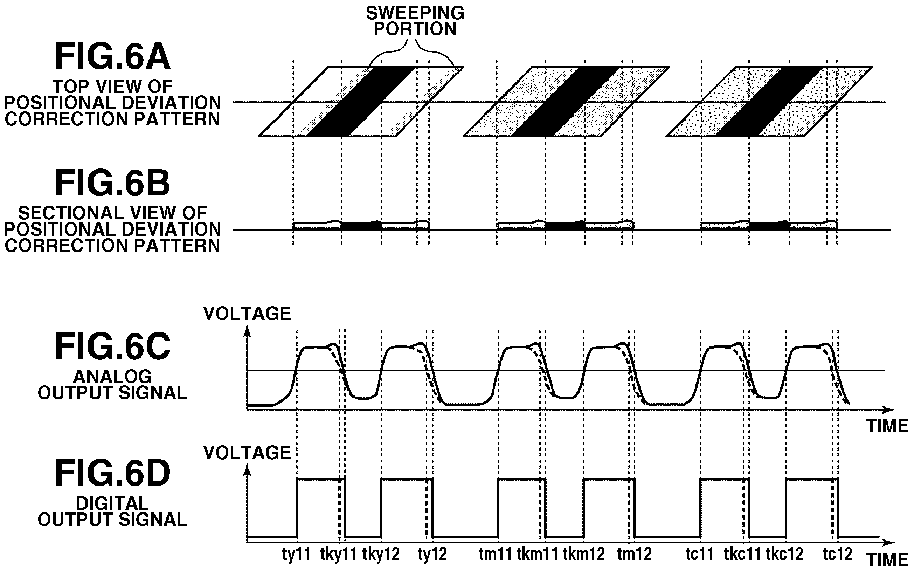

Next, referring to Figs. 6A to 8D, the positional deviation correction patterns formed according to the present embodiment will be described. Figs. 6A to 6D are diagrams illustrating examples of an analog output signal waveform and a digital output signal when the positional deviation correction patterns are detected by the sensor.

Fig. 6A is a top view of the positional deviation correction pattern, and Fig. 6B is a sectional view of the positional deviation correction pattern. Fig. 6C illustrates an example of an analog output signal waveform when the positional deviation correction pattern is detected by the sensor unit 225. Fig. 6D illustrates an example of a digital output signal waveform acquired by binarizing the detected analog output signal by the comparator according to a magnitude relationship with a threshold voltage.

As illustrated in Fig. 6C, the analog output signal output when the sensor unit 225 detects a color developer pattern is detected as a signal equal to or higher than a preset predetermined threshold voltage because there is much diffused reflection light from the color developer.

On the other hand, the analog output signal when the sensor unit 225 detects the black developer pattern or the intermediate transfer belt 219 is detected as a signal equal to or lower than the preset predetermined threshold voltage because diffused reflection light output from the color developer is limited. Thus, a boundary between the color developer pattern and the black developer pattern can be identified.

The detected analog output signal is binarized by the comparator according to a magnitude relationship with the threshold voltage to be converted into a digital output signal. The intermediate transfer belt 219 is generally formed by black or a color close to black. However, when the signal is output as a signal equal to or lower than the predetermined threshold voltage, the intermediate transfer belt 219 may be formed by other colors.

Based on the digital output signal illustrated in Fig. 6D, edges ty11, ty12, tm11, tm12, tc11, and tc12 of the color developer patterns of respective colors and edges tky11, tky12, tkm11, tkm12, tkc11, and tkc12 of the black developer patterns are detected as positional deviation correction pattern detection signals. The analog output signal and the digital output signal are detected as indicated by broken lines illustrated in 6C and 6D when no sweeping occurs.

On the other hand, when sweeping occurs, as indicated by solid lines illustrated in Figs. 6C and 6D, outputs at pattern trailing edges are larger than those indicated by the broken lines. This is because when sweeping occurs at the positional deviation correction pattern, while there is no change in edge position of the trailing edge of the positional deviation correction pattern formed on the intermediate transfer belt 219, a density at the trailing edge is larger to increase the amount of reflected light detected by the sensor unit 225.

In other words, it is because a falling timing of the analog output signal is later by an amount equal to the increase of the amount of reflected light, and thus the trailing edge is detected later. Hereinbelow, a positional deviation detection method will be described by using an output value when a positional deviation detection pattern where sweeping occurs is detected.

<Positional Deviation Detection Method>

A method for calculating a positional deviation amount of each color based on a detection result of positional deviation correction pattern will be described. Calculation described below is carried out by the control unit 206. In the present embodiment, a positional deviation amount between the color images is calculated by acquiring a positional deviation amount between a reference color pattern and a measured color pattern.

As an example, a relative positional deviation amount between colors is calculated by setting a black developer pattern as a reference color pattern, and a yellow developer pattern, a magenta developer pattern, and a cyan developer pattern as measured color patterns.

Figs. 6A to 6D illustrate a state where no relative color deviation occurs between the black developer pattern and the color developer pattern. Since no color deviation occurs, edges of the black developer patterns and the color developer patterns can be detected.

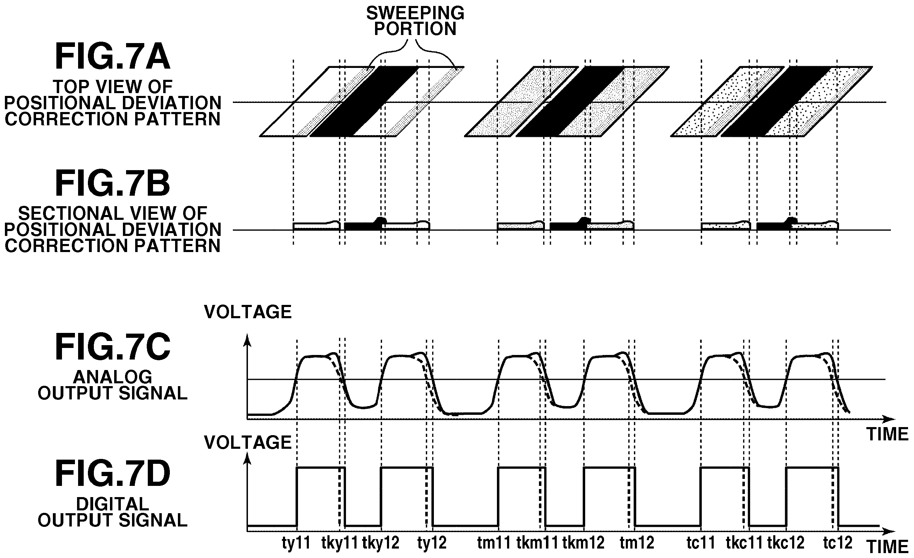

On the other hand, Figs. 7A to 7D illustrate a state where relative color deviation occurs between the black developer pattern and the color developer pattern. Specifically, the black developer pattern and the color developer pattern formed at the trailing edge are superposed.

A gap is formed between the black developer pattern and the color developer pattern formed at the leading edge side to expose the intermediate transfer belt 219. In such a state, an edge at the leading edge side of the black developer pattern cannot be detected. This is because an output value output from the intermediate transfer belt 219 is lower than a threshold value before the leading edge of the black developer pattern is detected.

Accordingly, in such a case, an edge of the color developer pattern with the intermediate transfer belt 219 is detected as tky11.

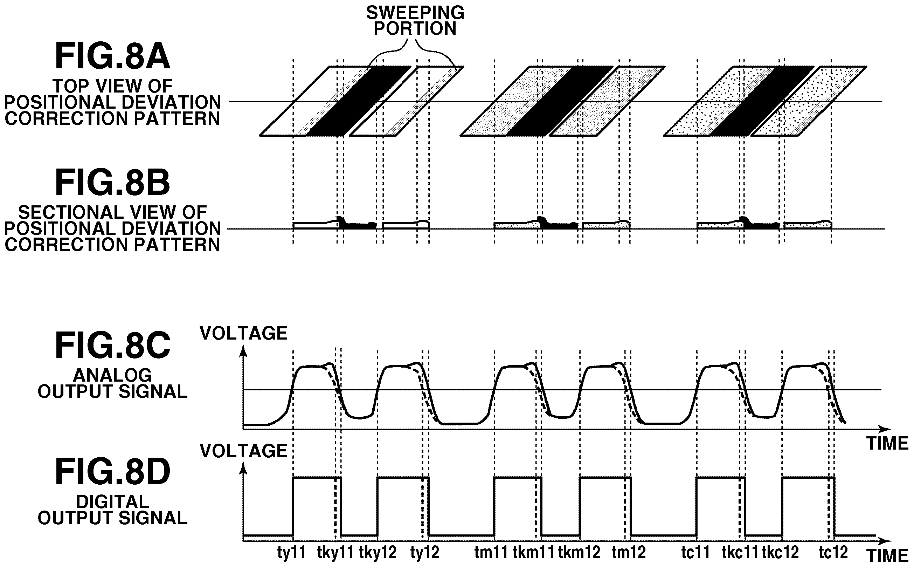

Figs. 8A to 8D illustrate a state where relative color deviation occurs between the black developer pattern and the color developer pattern. Specifically, the black developer pattern and the color developer pattern formed at the leading edge side are superposed.

A gap is formed between the black developer pattern and the color developer pattern formed at the trailing edge side to expose the intermediate transfer belt 219. In such a state, an edge at the trailing edge side of the black developer pattern cannot be detected.

This is because since the intermediate transfer belt 219 is exposed after the trailing edge of the black developer pattern, an output value output from the intermediate transfer belt 219 is lower than the threshold value following the trailing edge of the black developer pattern.

Accordingly, in such a case, an edge of the color developer pattern with the intermediate transfer belt 219 is detected as tky12.

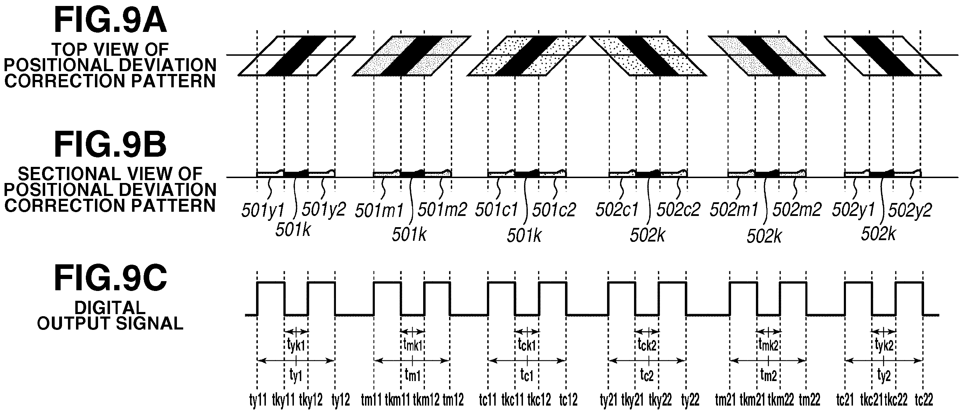

Referring to Figs. 9A to 9C, a method for calculating a positional deviation amount will be described. First, symbols in the digital output signal illustrated in Fig. 9A will be described. For convenience, the calculation method will be described by using, among the positional deviation correction patterns, one set for each of the colors as a representative. For the other positional deviation correction patterns, positional deviation amounts can be calculated by the same method.

Figs. 9A to 9C illustrate patterns where no color deviation occurs as an example. However, by the same method, positional deviation amounts can be calculated when positional deviation occurs as in the case of those illustrated in Figs. 7A to 7D and Figs. 8A to 8D.

Leading edge position detection timing of first yellow developer pattern ty11,
leading edge position detection timing of first black developer pattern tky11,
trailing edge position detection timing of first black developer pattern tky12,
trailing edge position detection timing of second yellow developer pattern ty12,
leading edge position detection timing of first magenta developer pattern tm11,
leading edge position detection timing of second black developer pattern tkm11,
trailing edge position detection timing of second black developer pattern tkm12,
trailing edge position detection timing of second magenta developer pattern tm12,
leading edge position detection timing of first cyan developer pattern tc11,
leading edge position detection timing of third black developer pattern tkc11,
trailing edge position detection timing of third black developer pattern tkc12, and
trailing edge position detection timing of second cyan developer pattern tc12.
Center positions of the respective color patterns are calculated by the following expressions using these detection timings.

$$\text{Center position of yellow developer pattern } ty1 = (ty11 + ty12)/2 \qquad \ldots (1)$$

$$\text{Center position of magenta developer pattern } tm1 = (tm11 + tm12)/2 \qquad \ldots (2)$$

$$\text{Center position of cyan developer pattern } tc1 = (tc11 + tc12)/2 \qquad \ldots (3)$$

$$\text{Center position of black developer pattern sandwiched between yellow developer patterns } tyk1 = (tky11 + tky12)/2 \qquad \ldots (4)$$

$$\text{Center position of black developer pattern sandwiched between magenta developer patterns } tmk1 = (tkm11 + tkm12)/2 \qquad \ldots (5)$$

$$\text{Center position of black developer pattern sandwiched between}$$

$$\text{cyan developer patterns } tck1 = (tkc11 + tkc12)/2$$

$$\dots (6)$$

Based on the calculated center positions of the patterns, positional deviation time of each pattern of the other colors in the sub-scanning direction with respect to the black developer pattern as a reference color is calculated by the following expressions. As described above referring to Figs. 7A to 7D and Figs. 8A to 8D, when positional deviation occurs, for an edge on the leading edge side or the trailing edge side of the black developer pattern, not the black developer pattern but the intermediate transfer belt 219 is detected.

Consequently, a width wider than an actual width of the black developer pattern is detected, and the center position of the black developer pattern is slightly shifted from an actual center position. In the expressions below, the deviation of the black developer pattern is corrected by doubling a difference in center position between the black developer pattern and the color developer pattern.

$$\text{Sub-scanning position deviation time of yellow developer}$$

$$\text{pattern } PDt\_yk = ((tyk1 - ty1)*2 + (tyk2 - ty2)*2)/2 \dots (7)$$

$$\text{Sub-scanning position deviation time of magenta developer}$$

$$\text{pattern } PDt\_mk = ((tmk1 - tm1)*2 + (tmk2 - tm2)*2)/2 \dots (8)$$

$$\text{Sub-scanning position deviation time of yellow developer}$$

$$\text{pattern } PDt\_ck = ((tck1 - tc1)*2 + (tck2 - tc2)*2)/2 \dots (9)$$

Correction of the deviation of the black developer pattern can be performed by doubling the differences in the expressions (7), (8), and (9) will be described by taking a specific example. A specific example of calculating deviation time between the black developer pattern and the yellow developer pattern using the expression (7) will be described. For convenience, the center positions ty1 and ty2 of the yellow developer patterns are set to equal values, and the center positions tyk1 and tyk2 of the black developer patterns sandwiched by the yellow developer patterns are set to equal values.

It is supposed that a yellow developer pattern of the leading edge side is formed with a width of 3 dots from the 1st dot to the 3rd dot, a black developer pattern is formed with a width of 4 dots from the 4th to the 7th dot, and a yellow developer pattern of the trailing edge side is formed a width of 3 dots from the 8th dot to the 10th dot.

A specific positional deviation calculation method for (i) a state where no color deviation occurs, (ii) a superposed state of the black developer pattern and the color developer pattern formed on the trailing edge side, and (iii) a superposed state of the black developer pattern and the color developer pattern formed on the leading edge side in this status will be described.

(i) State where no color deviation occurs

The center position of the yellow developer pattern is calculated by the expression (1). Since the leading edge position detection timing of the yellow developer pattern of the leading edge side is ty11 = 0 and the trailing edge position detection timing of the yellow developer pattern of the trailing edge side is ty12 = 10, the center position of the yellow developer pattern is ty1 = (ty11 + ty12)/2 = (0 + 10)/2 = 5, and thus ty 1 = 5 is set. Similarly, ty2 = 5 is set. The center position of the black developer pattern is calculated by the expression (4). Since the leading edge position detection timing of the black developer pattern is tky11 = 3 and the trailing edge position detection timing of the black developer pattern is tky12 = 7, the center position of the black developer pattern sandwiched between the yellow developer patterns is tyk1 = (tky11 + tky12)/2 = (3 + 7)/2 = 5, and thus tyk 1 = 5 is set. Similarly, tyk2 = 5 is set. By substituting the expression (7) with this result, sub-scanning positional deviation time of the yellow developer pattern is PDt_yk = ((tyk1 - ty1)*2 + (tyk2 - ty2)*2)/2 = (5 - 5)*2 + (5 - 5)*2)/2 = 0. Accordingly, a value indicating no occurrence of color deviation can be calculated.

(ii) Superposed state of the black developer pattern and the color developer pattern formed on the trailing edge side A state where the black developer pattern and the yellow developer pattern on the downstream side are superposed by 1 dot will be described supposing that a yellow developer pattern of the leading edge side is formed with a width of 3 dots from the 1st dot to the 3rd dot, a black developer pattern is formed with a width of 4 dots from the 5th to the 8th dot, and a yellow developer pattern of the trailing edge side is formed a width of 3 dots from the 8th dot to the 10th dot.

The center position of the yellow developer pattern is calculated by the expression (1). Since the leading edge position detection timing of the yellow developer pattern of the leading edge side is $ty11 = 0$ and the trailing edge position detection timing of the yellow developer pattern of the trailing edge side is $ty12 = 10$, the center position of the yellow developer pattern is $ty1 = (ty11 + ty12)/2 = (0 + 10)/2 = 5$, and thus $ty1 = 5$ is set. Similarly, $ty2 = 5$ is set. The center position of the black developer pattern is calculated by the expression (4). Since the black developer pattern is shifted to the downstream side by 1 dot, there is no developer at the 3rd dot, thus the intermediate transfer belt is exposed.

In this state, the timing of detecting the intermediate transfer belt is detected to be a boundary between the yellow developer pattern and the black developer pattern. Accordingly, the leading edge position detection timing of the black developer pattern is $tky11 = 3$ and the trailing edge position detection timing of the black developer pattern is $tky12 = 8$. In other words, while formed by 4 dots in practice, the black developer pattern is detected as a pattern of 5 dots. Thus, the center position of the black developer pattern is that of the black developer pattern sandwiched between the yellow developer patterns $tyk1 = (tky11 + tky12)/2 = (3 + 8)/2 = 5.5$, and thus $tyk1 = 5.5$ is set. Similarly, $tyk2 = 5.5$ is set.

By substituting the expression (7) with this result, sub-scanning positional deviation time of the yellow developer pattern is $PDt\_yk = ((tyk1 - ty1)*2 + (tyk2 - ty2)*2)/2 = (5.5 - 5)*2 + (5.5 - 5)*2)/2 = 1$. Accordingly, by doubling the difference, 1-dot occurrence of black developer pattern deviation can be calculated.

(iii) Superposed state of the black developer pattern and the color developer pattern formed on the leading edge side A state where the black developer pattern and the yellow developer pattern on the upstream side are superposed by 1 dot will be described supposing that a yellow developer pattern of the leading edge side is formed with a width of 3 dots from the 1st dot to the 3rd dot, a black developer pattern is formed with a width of 4 dots from the 3th to the 6th dot, and a yellow developer pattern of the trailing edge side is formed a width of 3 dots from the 8th dot to the 10th dot.

The center position of the yellow developer pattern is calculated by the expression (1). Since the leading edge position detection timing of the yellow developer pattern of the leading edge side is $ty11 = 0$ and the trailing edge position detection timing of the yellow developer pattern of the trailing edge side is $ty12 = 10$, the center position of the yellow developer pattern is $ty1 = (ty11 + ty12)/2 = (0 + 10)/2 = 5$, and thus $ty1 = 5$ is set. Similarly, $ty2 = 5$ is set.

The center position of the black developer pattern is calculated by using the expression (4). Since the black developer pattern is shifted to the upstream side by 1 dot, there is no developer at the 7th dot, thus the intermediate transfer belt is exposed.

In this state, the timing of detecting the yellow developer pattern of the trailing is obtained to be a boundary between the yellow developer pattern and the black developer pattern. Accordingly, the leading edge position detection timing of the black developer pattern is $tky11 = 2$ and the trailing edge position detection timing of the black developer pattern is $tky12 = 7$.

In other words, while formed by 4 dots in practice, the black developer pattern is detected as a pattern of 5 dots. Thus, the center position of the black developer pattern is that of the black developer pattern sandwiched between the yellow developer patterns $tyk1 = (tky11 + tky12)/2 = (2 + 7)/2 = 4.5$, and thus $tyk1 = 4.5$ is set. Similarly, $tyk2 = 4.5$ is set.

By substituting the expression (7) with this result, sub-scanning positional deviation time of the yellow developer pattern is $PDt\_yk = ((tyk1 - ty1)*2 + (tyk2 - ty2)*2)/2 = (4.5 - 5)*2 + (4.5 - 5)*2)/2 = -1$. Accordingly, by doubling the difference, 1-dot occurrence of black developer pattern deviation can be calculated.

The example method for correcting the error of the black developer pattern by doubling the calculated difference has been described above. However, the present invention is not limited thereto. For example, a correction table corresponding to a value not doubling the difference may be created, and a value referred to in the table can be set as sub-scanning direction positional deviation time of each color.

Time corresponding to each of the leading edge position, the trailing edge position, and the center position of each color pattern indicates time elapsed from reference time (e.g., timer measurement starting time). The control unit 206 calculates, by converting calculated positional deviation time into a positional deviation amount by using a speed PS of the intermediate transfer belt 219, relative positional deviation amounts of the other color patterns with respect to the black developer pattern as a reference color by using the following expressions:

```
sub-scanning position deviation amount of yellow developer

pattern PDd1_yk = PS × PDt_yk                    ... (10)

sub-scanning position deviation amount of magenta developer

pattern PDd1_mk = PS × PDt_mk                    ... (11)

sub-scanning position deviation amount of cyan developer

pattern PDd1_ck = PS × PDt_ck                    ... (12)
```

The control unit 206 carries out the calculation for each one set of positional deviation correction patterns, and calculates an average of all the sets of positional deviation correction patterns to calculate relative positional deviation amounts of sub-scanning writing positions of the other color patterns with respect to the black developer pattern as the reference color.

When the calculated positional deviation amounts PDd1_yk, PDd1_mk, and PDd1_ck are positive values, writing of the measured colors (yellow, magenta, and cyan) is later with respect to the reference color (black) . On the other hand, when the positional deviation amounts PDd1_yk, PDd1_mk, and PDd1_ck are negative values, writing of the measured colors is earlier with respect to the reference color.

The control unit 206 calculates, based on the calculated center positions of the patterns, main-scanning direction positional deviation times of the other color patterns with respect to the black developer pattern as the reference color by using the following expressions.

As described above referring to Figs. 7A to 7D and Figs. 8A to 8D, when positional deviation occurs, for an edge on the leading edge side or the trailing edge side of the black developer pattern, not the black developer pattern but the intermediate transfer belt 219 is detected. Consequently, a width wider than an actual width of the black developer pattern is detected, and the center position of the black developer pattern is slightly shifted from an actual center position.

In the expressions below, the deviation of the black developer pattern is corrected by doubling a difference in center position between the black developer pattern and the color developer pattern.

```
Main scanning position deviation time of yellow developer

pattern SDt_yk = ((ty1 - tyk1)*2 - (ty2 - tyk2)*2)/2 ... (13)

Main scanning position deviation time of magenta developer

pattern SDt_mk = ((tm1 - tmk1)*2 - (tm2 - tmk2)*2)/2 ... (14)

Main scanning position deviation time of cyan developer pattern

SDt_ck = ((tc1 - tck1)*2 - (tc2 - tck2)*2)/2 ... (15)
```

The example method for correcting the error of the black developer pattern by doubling the calculated difference has been described above. However, the present invention is not limited thereto. For example, a correction table corresponding to a value not doubling the difference can be created, and a value referred to in the table can be set as main scanning direction positional deviation time of each color.

Time corresponding to each of the leading edge position, the trailing edge position, and the center position of each color pattern indicates time elapsed from reference time (e.g., timer measurement starting time). The control unit 206 calculates, by converting the calculated positional deviation time into a positional deviation amount by using the speed PS of the intermediate transfer belt 219, relative positional deviation amounts of the other color patterns with respect to the black developer pattern as a reference color by using the following expressions:

Main scanning position deviation amount of yellow developer

pattern SDd1_yk = PS × SDt_yk          ... (16)

Main scanning position deviation amount of magenta developer

pattern SDd1_mk = PS × SDt_mk          ... (17)

Main scanning position deviation amount of cyan developer

pattern SDd1_ck = PS × SDt_ck          ... (18)

The control unit 206 carries out the calculation for each set of positional deviation correction patterns, and calculates an average of all the sets of positional deviation correction patterns to calculate relative positional deviation amounts of main scanning writing positions of the other color patterns with respect to the black developer pattern as the reference color.

When the calculated positional deviation amounts SDd1_yk, SDd1_mk, and SDd1_ck are positive values, writing of the measured colors (yellow, magenta, and cyan) is later with respect to the reference color (black) . On the other hand, when the positional deviation amounts SDd1_yk, SDd1_mk, and SDd1_ck are negative values, writing of the measured colors is earlier with respect to the reference color.

Thus, different from the conventional case where one black developer pattern is superposed on one color developer pattern to detect positional deviation, one black developer pattern and two color developer patterns of the same color are arranged side by side, and one black developer pattern is sandwiched between the two color developer patterns.

Thus, sweeping occurs in the pattern disposed on the leading edge side and the pattern disposed on the trailing edge side in the conveyance direction of the intermediate transfer belt 219 of the color developer pattern.

Because of the sweeping in the color developer pattern disposed on the leading edge side, the timing of detecting the leading edge of the black developer pattern is delayed. Similarly, because of the sweeping in the color developer pattern disposed on the trailing edge side, the timing of detecting the trailing edge of the color developer pattern is delayed.

Thus, the center position of the color developer pattern and the center position of the black developer pattern are affected by the sweeping to shift to the trailing edge side. As a result, since the sweeping in the color developer pattern of the leading edge side and the sweeping in the color developer pattern of the trailing edge side cause deviation of similar levels in detection of the center position of the black developer pattern and detection of the center position of the color developer pattern, the influence of the sweeping when the center position of the black developer pattern is compared with the center position of the color developer pattern can be canceled.

As a result, positional deviation between the color images formed on the image bearing members can be corrected by suppressing reduction of accuracy caused by the influence of sweeping.

In the first embodiment, the method for correcting the positional deviation by forming the black developer pattern between the color developer patterns, has been described. In the second embodiment, a method for correcting positional deviation by forming a black developer pattern between arbitrary color developer patterns of one color, will be described. Description of components similar to those of the first embodiment is omitted.

<Positional Deviation Correction Pattern>

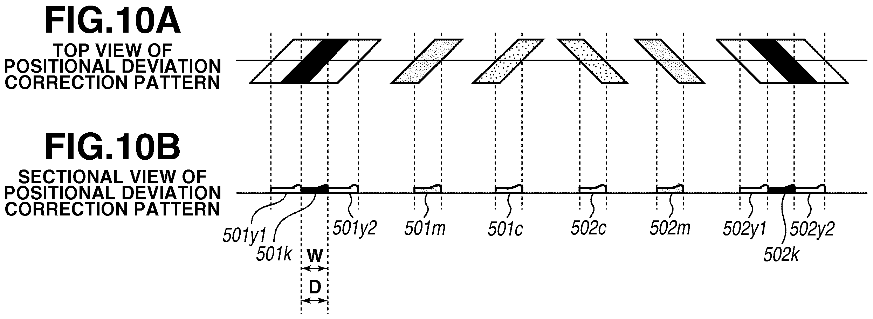

Figs. 10A and 10B are diagrams illustrating a configuration example of positional deviation correction patterns according to the present embodiment. The positional deviation correction pattern includes yellow developer patterns 501y1, 501y2, 502y1, and 502y2, magenta developer patterns 501m and 502m, cyan developer patterns 501c and 502c, and black developer patterns 501k and 502k.

As illustrated in Figs. 10A and 10B, the positional deviation correction pattern is formed by reversing the downstream side patterns 502y1, 502y2, 502m, 502c, and 502k of respective colors formed on the downstream side of a conveyance direction with respect to the upstream side patterns 501y1, 501y2, 501m, 501c, 501c, and 501k of respective colors formed on the upstream side of the conveyance direction.

In the present embodiment, the patterns formed by four color developers illustrated in Figs. 10A and 10B are defined as one set of positional deviation correction patterns.

Detecting a positional deviation amount between the color images of one set of positional deviation correction patterns by a sensor unit 225 enables detection of positional deviation amounts of the respective color patterns in a main scanning direction and a sub-scanning direction.

The positional deviation correction pattern according to the present embodiment is formed not by superposing one black developer pattern on one color developer pattern as in the conventional case but by adjacently forming one black developer pattern between two color developer patterns of the same colors.

To form much more positional deviation correction patterns on one circumference of an intermediate transfer belt 219, a black developer pattern 501k is formed between the yellow developer patterns 501y1 and 501y2.

Each of the magenta developer pattern and the cyan developer pattern is formed as one pattern without sandwiching any black developer pattern. The black developer patterns are formed to be sandwiched by the yellow developer pattern as an example. However, the black developer pattern can be sandwiched between the magenta developer patterns or cyan developer patterns.

As in the case of the first embodiment, a pattern width W of the black developer pattern is equal to a gap interval D from, among the color developer patterns sandwiching the black developer pattern, the trailing edge of the first pattern 501y1 to the leading edge of the second pattern 501y2.

If the black developer pattern width W is equal to the gap interval D, whatever value the width is, when positional deviation occurs, the color developer pattern and the black developer pattern are superposed on each other.

However, it is not limited thereto, for example, the pattern width W of the black developer pattern can be roughly equal to the gap interval D between the first pattern and the second pattern of the color developer pattern, i.e., different by about ± 200 μm from the gap interval D, as a range permitted by positional deviation detection accuracy when positional deviation occurs.

In other words, the pattern width W of the black developer pattern does not need to be completely equal to the gap interval D between the two color developer patterns as long as one black developer pattern is superposed on one or both of two adjacent color developer patterns when color deviation occurs.

Further, a relationship between the pattern width W and the gap interval D is determined so that when color deviation occurs to cause the black developer pattern to be superposed on the color developer pattern on the upstream side of the conveyance direction, a width of sweeping occurring in the color developer pattern may be larger than a superposed width.

The example of the first pattern 501y1 and the second pattern 501y2 has been described above. However, the present invention is not limited thereto. For example, a similar relationship between the pattern width W and the gap interval D is established in any combinations of 502y1 and 501y2. The example where the yellow developer patterns sandwich the black developer pattern has been described above. However, a similar relationship is established when the magenta developer patterns or the cyan developer patterns sandwich the black developer pattern.

As in the case of the first embodiment, a plurality of sets of positional deviation correction patterns illustrated in Figs. 10A and 10B is formed within one circumference of the intermediate transfer belt 129 so that periodic unevenness of the photosensitive drums 215 and periodic unevenness of the intermediate transfer belt 219 can be canceled. The positional deviation correction patterns are sequentially detected by the sensor unit 225.

<Positional Deviation Detection Method>

A method for calculating a positional deviation amount of each color based on a detection result of positional deviation correction pattern according to the present embodiment will be described. Calculation described below is carried out by the control unit 206. In the present embodiment, a positional deviation amount between the color images is calculated by acquiring a positional deviation amount between a reference color pattern and a measured color pattern. As an example, a relative positional deviation amount between colors is calculated by setting a yellow developer pattern as a reference color pattern and a black developer pattern, a magenta developer pattern, and a cyan developer pattern as measured color patterns.

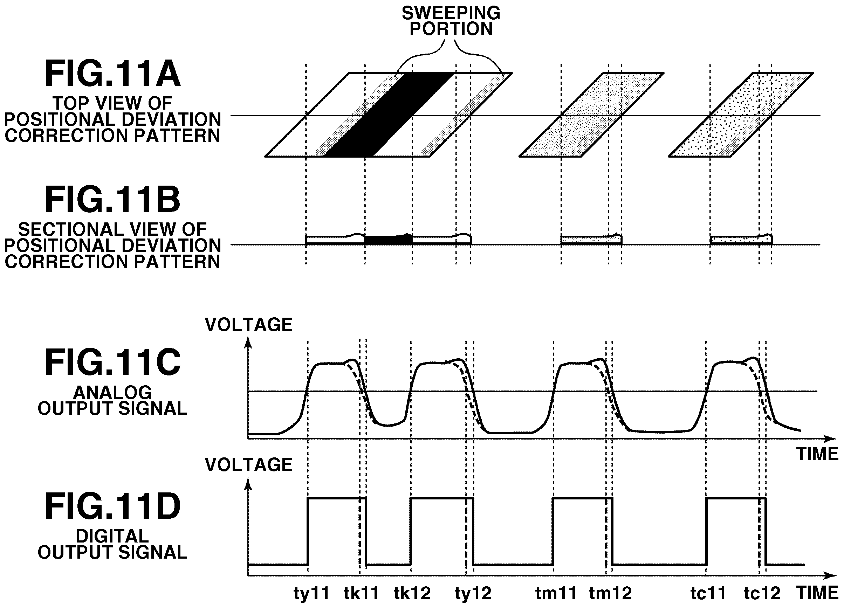

Referring to Figs. 11A to 13D, positional deviation correction patterns formed in the present embodiment will be described.

Figs. 11A to 11D illustrate a state where no relative color deviation occurs between the yellow developer pattern and the black developer pattern. Since no color deviation occurs, edges of the black developer pattern and the yellow developer pattern can be detected.

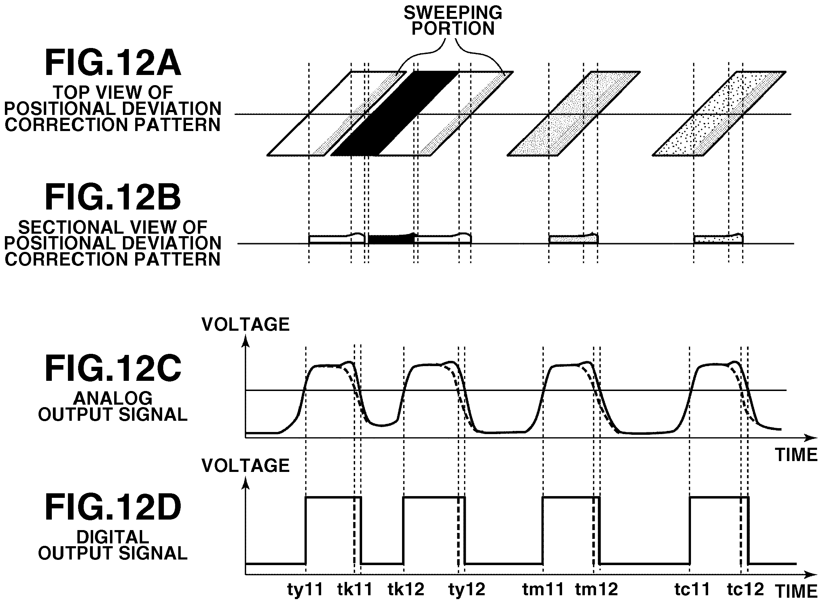

On the other hand, Figs. 12A to 12D illustrate a state where relative color deviation occurs between the black developer pattern and the yellow developer pattern. Specifically, the black developer pattern and the color developer pattern formed at the trailing edge are superposed.

A gap is formed between the black developer pattern and the yellow developer pattern formed at the leading edge side to expose the intermediate transfer belt 219. In such a state, an edge at the leading edge side of the black developer pattern cannot be detected.

This is because an output value output from the intermediate transfer belt 219 is lowered before the leading edge of the black developer pattern is detected. Accordingly, in such a case, an edge of the yellow developer pattern with the intermediate transfer belt 219 is detected as tk11.

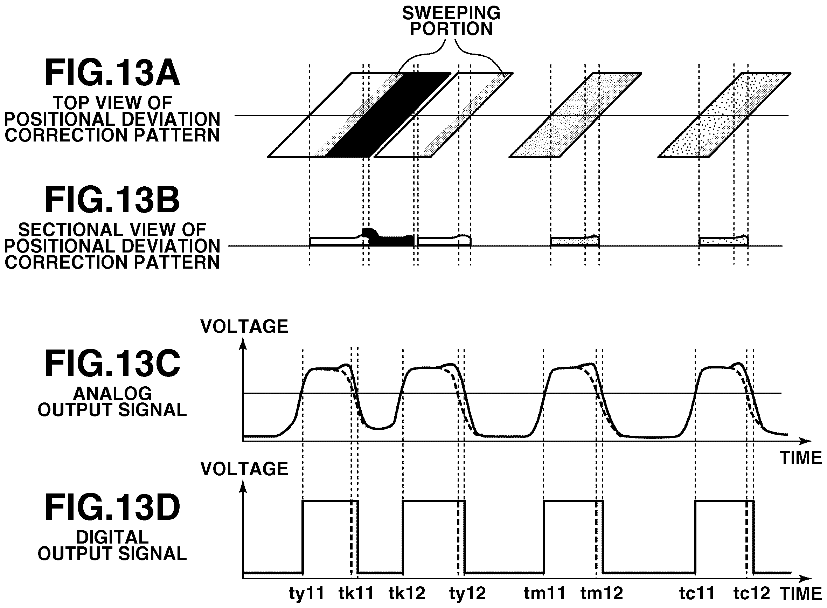

Figs. 13A to 13D illustrate a state where relative color deviation occurs between the black developer pattern and the color developer pattern. Specifically, the black developer pattern and the yellow developer pattern formed at the leading edge side are superposed together.

A gap is formed between the black developer pattern and the yellow developer pattern formed at the trailing edge side to expose the intermediate transfer belt 219. In such a state, an edge at the trailing edge side of the black developer pattern cannot be detected.

This is because an output value is lowered by the intermediate transfer belt 219 before the leading edge of the black developer pattern is detected. Accordingly, in such a case, an edge of the yellow developer pattern with the intermediate transfer belt 219 is detected as tk12.

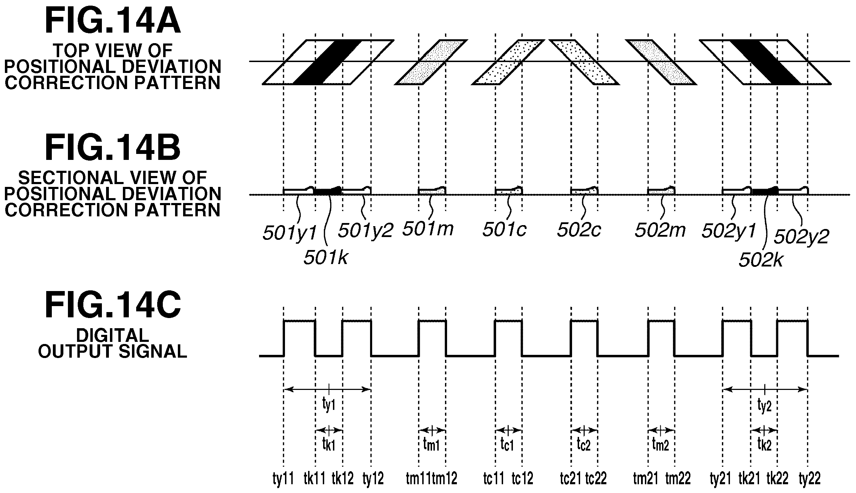

Referring to Figs. 14A to 14C, a method for calculating a positional deviation amount will be described. First, symbols in a digital output signal illustrated in Fig. 14C will be described. For convenience, the calculation method will be described by using, among the positional deviation correction patterns, one set for each of the colors as a representative.

For the other positional deviation correction patterns, positional deviation amounts can be calculated by the same method. Figs. 14A to 14C illustrate patterns where no color deviation occurs as an example. However, by the same method, positional deviation amounts can be calculated when positional deviation occurs as in the case illustrated in Figs. 12A to 12D and Figs. 13A to 13D.

Leading edge position detection timing of first yellow developer pattern ty11,
leading edge position detection timing of first black developer pattern tk11,
trailing edge position detection timing of first black developer pattern tk12,
trailing edge position detection timing of second yellow developer pattern ty12,
leading edge position detection timing of first magenta developer pattern tm11,
trailing edge position detection timing of second magenta developer pattern tm12,
leading edge position detection timing of first cyan developer pattern tc11, and
trailing edge position detection timing of second cyan developer pattern tc12.

Center positions of the respective color patterns are calculated by using the following expressions using these detection timings.

$$\text{Center position of yellow developer pattern ty1} = (ty11 + ty12)/2 \qquad \dots (19)$$

$$\text{Center position of magenta developer pattern tm1} = (tm11 + tm12)/2 \qquad \dots (20)$$

$$\text{Center position of cyan developer pattern tc1} = (tc11 + tc12)/2 \qquad \dots (21)$$

$$\text{Center position of black developer pattern tk1} = (tk11 + tk12)/2 \qquad \dots (22)$$

Based on the calculated center positions of the patterns, positional deviation time of each pattern of the other colors in the sub-scanning direction with respect to the yellow developer pattern as a reference color is calculated by the following expressions. As described above in the first embodiment, when positional deviation occurs, for an edge on the leading edge side or the trailing edge side of the black developer pattern, not the black developer pattern but the intermediate transfer belt 219 is detected.

Consequently, a width wider than an actual width of the black developer pattern is detected, and the center position of the black developer pattern is slightly shifted from an actual center position. In the expressions below, the deviation of the black developer pattern is corrected by doubling a difference in center position between the black developer pattern and the yellow developer pattern as in the case of the first embodiment.

The magenta developer pattern and the cyan developer pattern are not formed to sandwich the black developer pattern. Thus, since there is no need to correct deviation of the black developer pattern, the difference is not doubled.

Sub-scanning position deviation time of magenta developer

pattern PDt_my = ((tm1 - ty1) + (tm2 - ty2))/2 ... (23)

Sub-scanning position deviation time of cyan developer pattern

PDt_cy = ((tc1 - ty1) + (tc2 - ty2))/2 ... (24)

Sub-scanning position deviation time of black developer pattern

PDt_ky = ((tk1 - ty1)*2 + (tk2 - ty2)*2)/2 ... (25)

The example method for correcting the error of the black developer pattern by doubling the calculated difference has been described above. However, the present invention is not limited thereto. For example, a correction table corresponding to a value not doubling the difference can be created, and a value referred to in the table can be set as sub-scanning direction positional deviation time of each color.

Time corresponding to each of the leading edge position, the trailing edge position, and the center position of each color pattern indicates time elapsed from reference time (e.g., timer measurement starting time). The control unit 206 calculates, by converting the calculated positional deviation time into a positional deviation amount by using the speed PS of the intermediate transfer belt 219, relative positional deviation amounts of the other color patterns with respect to the yellow developer pattern as a reference color by using the following expressions:

sub-scanning position deviation amount of magenta developer

pattern PDd1_my = PS × PDt_my ... (26)

sub-scanning position deviation amount of cyan developer

pattern PDd1_cy = PS × PDt_cy ... (27)

sub-scanning position deviation amount of black developer

pattern PDd1_ky = PS × PDt_ky ... (28)

The control unit 206 carries out the calculation for each one set of positional deviation correction patterns, and calculates an average of all the sets of the positional deviation correction patterns to calculate relative positional deviation amounts of sub-scanning writing positions of the other color patterns with respect to the yellow developer pattern as the reference color.

When the calculated positional deviation amounts PDd1_my, PDd1_cy, and PDd1_ky are positive values, writing of the measured colors (magenta, cyan, and black) is delayed with respect to the reference color (yellow).

On the other hand, when the positional deviation amounts PDd1_my, PDd1_cy, and PDd1_ky are negative values, writing of the measured colors is earlier with respect to the reference color.

The control unit 206 calculates, based on the calculated center positions of the patterns, main-scanning direction positional deviation time of each of the other color patterns with respect to the black developer pattern as the reference color.

In the present embodiment, the magenta developer pattern and the cyan developer pattern are not formed to be sandwiched by the yellow developer patterns set as the reference for positional deviation correction. Thus, when main-scanning direction positional deviation time of each of the magenta developer pattern and the cyan developer pattern with respect to the yellow developer pattern is calculated, positional deviation time between the colors is calculated based on nominal time tcy_ref, tmy_ref of detection timing calculated between the patterns from a nominal distance between the yellow developer pattern and the magenta developer pattern and a nominal distance between the yellow developer pattern and the cyan developer pattern.

```
Main scanning position deviation time of magenta developer
pattern SDt_my = ((tm1 - tmy_ref) - (tm2 + tmy_ref))/2 ... (29)

Main scanning position deviation time of cyan developer pattern
SDt_cy = ((tc1 - tcy_ref) - (tc2 + tcy_ref)/2 ... (30)

Main scanning position deviation time of black developer
pattern SDt_ky = ((tk1 - ty1)*2 - (tk2 - ty2)*2)/2 ... (31)
```

The example method for correcting the error of the black developer pattern by doubling the calculated difference has been described above. However, the present invention is not limited thereto. For example, a correction table corresponding to a value not doubling the difference can be created, and a value referred to in the table can be set as main scanning direction positional deviation time of each color.

Time corresponding to each of the leading edge position, the trailing edge position, and the center position of each color pattern indicates time elapsed from reference time (e.g., timer measurement starting time). The control unit 206 calculates, by converting the calculated positional deviation time into a positional deviation amount by using the speed PS of the intermediate transfer belt 219, relative positional deviation amounts of the other color patterns with respect to the yellow developer pattern as a reference color by using the following expressions:

```
Main scanning position deviation amount of magenta developer
pattern SDd1_my = PS × SDt_my                    ... (32)

 Main scanning position deviation amount of cyan developer
 pattern SDd1_cy = PS × SDt_cy                    ... (33)

Main scanning position deviation amount of black developer
pattern SDd1_ky = PS × SDt_ky                    ... (34)
```

The control unit 206 carries out the calculation for each one set of positional deviation correction patterns, and calculates an average of all the sets of the positional deviation correction patterns to calculate relative positional deviation amounts of main scanning writing positions of the other color patterns with respect to the yellow developer pattern as the reference color.

When the calculated positional deviation amounts SDd1_my, SDd1_cy, and SDd1_ky are positive values, writing of the measured colors (magenta, cyan, and black) is later with respect to the reference color (yellow).

On the other hand, when the positional deviation amounts SDd1_my, SDd1_cy, and SDd1_ky are negative values, writing of the measured colors is earlier with respect to the reference color.

Thus, according to the present embodiment, forming one black developer pattern to be sandwiched between two color developer patterns of one arbitrary color enables arrangement of much more positional deviation correction patterns within one circumference of the intermediate transfer belt 219.

Thus, as in the case of the first embodiment, different from the conventional case where one black developer pattern is superposed on one color developer pattern to detect positional deviation, one black developer pattern and two color developer patterns of the same color are arranged side by side, and one black developer pattern is sandwiched between the two color developer patterns.

Thus, sweeping occurs in the pattern disposed on the leading edge side and the pattern disposed on the trailing edge side in the conveyance direction of the intermediate transfer belt 219 of the color developer pattern. Because of the sweeping in the color developer pattern disposed on the leading edge side, the timing of detecting the leading edge of the black developer pattern is delayed.

Similarly, because of the sweeping in the color developer pattern disposed on the trailing edge side, the timing of detecting the trailing edge of the color developer pattern is delayed. Thus, the center position of the color developer pattern and the center position of the black developer pattern are affected by the sweeping to shift to the trailing edge side.

As a result, since the sweeping in the color developer pattern of the leading edge side and the sweeping in the color developer pattern of the trailing edge side cause deviation of similar levels in detection of the center position of the black developer pattern and detection of the center position of the color developer pattern, the influence of the sweeping when the center position of the black developer pattern is compared with the center position of the color developer pattern can be canceled.

As a result, positional deviation between the color images formed on the image bearing members can be corrected by suppressing reduction of accuracy caused by the influence of sweeping.

Each of the embodiments has been described by taking the examples where the positional deviation correction pattern is formed on the intermediate transfer belt 219 to be detected. However, the present invention is not limited thereto. For example, positional deviation correction can be carried out by forming and detecting a correction pattern on the recording material 221.

According to each of the embodiments, the image forming apparatus is configured in such a manner that the developer image is primarily transferred from the photosensitive drum 215 to the intermediate transfer belt 219 and the developer image on the intermediate transfer belt 219 is secondarily transferred to the recording material 221.

However, the present invention is not limited thereto. For example, the image forming apparatus can include a transfer unit for directly transferring the developer image from the photosensitive drum 215 to the recording material 221. In this case, the sensor unit 225 detects a position deviation correction pattern formed on the recording material 221.

According to each of the embodiments, the position of the photosensitive drum 215 is fixed, and the intermediate transfer belt 219 is moved. The developer images of the respective colors are accordingly transferred to the intermediate transfer belt 219 at different positions. Thus, developer images of a plurality of colors are formed. However, the image forming apparatus can be configured in such a manner that a plurality of photosensitive drums 215 is sequentially switched to form a developer image of each color.

According to the configuration of the present invention, in the image forming apparatus using the developers of the plurality of colors, positional deviation between the color images formed on the image bearing member can be corrected by suppressing reduction of accuracy caused by the influence of sweeping

While the present invention has been described with reference to embodiments, it is to be understood that the invention is limited to the claimed embodiments.

**Claims**

1. An image forming apparatus (201) comprising:

an image forming means configured to form a positional deviation correction pattern (305) including developer images of a plurality of colors;
a detection means (225) configured to emit light to the positional deviation correction pattern formed by the image forming means and to detect reflected light from the positional deviation correction pattern; and
a control means (206) configured to perform positional deviation correction based on the detected result by the detection means,
**characterized in that** the control means is configured to cause the image forming means to form the positional deviation correction pattern such that one black developer image is disposed between two color developer images of a same color, and in a case where a relative positional deviation occurs between the one black developer image and the two color developer images of the same color when the positional deviation correction pattern is formed, the control means is configured to cause the image forming means to form the positional deviation correction pattern such that either one of the two color developer images of the same color and the one black developer image are superposed on each other,
a sweeping in the color developer images occurs at a downstream edge in a conveyance direction of a transfer medium on which the color developer images are formed, (fig. 6a, fig. 6b)
a timing to detect the edge of the color developer images in the detected result obtained by the detection means is affected by a detection error due to the sweeping, and

the control means is arranged to obtain a center position of the two color developer images of a same color and a center position of the one black developer image based on the detected result detected by the detection means, and to cancel the detection error by obtaining a positional deviation amount based on the center position of the two color developer images of the same color and a center position of the one black developer image.

2. The image forming apparatus according to claim 1, wherein, in a case where a relative positional deviation doesn't occur between the one black developer image and the two color developer images of the same color when the positional deviation correction pattern is formed, the control means is arranged to cause the image forming means to form the two color developer images of the same color and the one black developer image so as not to be superposed on each other in the positional deviation correction pattern.

3. The image forming apparatus according to claim 1 or 2, wherein, in a case where a relative positional deviation occurs between the one black developer image and the two color developer images of the same color when the positional deviation correction pattern is formed the control means is arranged to cause the image forming means to form the positional deviation correction pattern such that a width of sweeping occurring in the color developer image will be larger than a width of superposing of either one of the two color developer images of the same color and the one black developer image, in the positional deviation correction pattern.

4. The image forming apparatus according to any one of claims 1 to 3, wherein the control means is configured to calculate, based on the detection result detected by the detection means, positional deviation amounts of the developer images of other colors with respect to a developer image of a predetermined reference color, and to perform the positional deviation correction based on the positional deviation amounts.

5. The image forming apparatus according to claim 4, wherein the control means is configured to calculate the positional deviation amounts corresponding to a value acquired by doubling a difference in center position between the developer image of the predetermined reference color and the developer images of the other colors.

6. The image forming apparatus according to claim 4, wherein the control means is configured to calculate the positional deviation amounts by using a correction table according to the difference in center position between the developer image of the predetermined reference color and the developer images of the other colors.

7. The image forming apparatus according to any one of claims 1 to 6, wherein the control means is configured to cause the image forming means to form the positional deviation correction pattern such that a black developer image is disposed between color developer images of a first color and a black developer image is not disposed between color developer images of a second color different from the first color.

8. The image forming apparatus according to any one of claims 1 to 7, wherein the control means is configured to cause the image forming means to form the positional deviation correction pattern in such a manner that an interval between the two color developer images of the same color and a width of the black developer image are substantially equal to each other.

9. The image forming apparatus according to claim 7, wherein, by determining the color developer images of a first color as a reference color, the control means calculates a positional deviation amount of the other color developer image with respect to the reference color and performs the positional deviation correction based on the positional deviation amount.

**Patentansprüche**

1. Bilderzeugungsvorrichtung (201), umfassend:

eine Bilderzeugungseinrichtung, die konfiguriert ist, ein Positionsabweichungskorrekturmuster (305) mit Entwicklerbildern mehrerer Farben zu erzeugen;
eine Detektionseinrichtung (225), die konfiguriert ist, Licht zum durch die Bilderzeugungseinrichtung erzeugten Positionsabweichungskorrekturmuster zu emittieren und vom Positionsabweichungskorrekturmuster reflektiertes Licht zu detektieren; und
eine Steuereinrichtung (206), die konfiguriert ist, Positionsabweichungskorrektur basierend auf dem Detektionsergebnis der Detektionseinrichtung durchzuführen;
**dadurch gekennzeichnet, dass** die Steuereinrichtung konfiguriert ist, die Bilderzeugungseinrichtung zu veranlassen, das Positionsabweichungskorrekturmuster so zu erzeugen, dass ein schwarzes Entwicklerbild zwischen zwei Farbentwicklerbildern einer gleichen Farbe angeordnet ist, und falls beim Erzeugen des Positionsabweichungskorrekturmusters eine relative Positionsabweichung zwischen dem einen schwarzen Entwicklerbild und den zwei Farbentwicklerbildern der gleichen Farbe auftritt, die Steuereinrichtung konfiguriert ist, die Bilderzeugungseinrichtung zu veranlassen, das Positionsabweichungskorrekturmuster so zu erzeugen, dass wenigstens eines der zwei Farbentwicklerbilder der gleichen Farbe und das eine schwarze Entwicklerbild einander überlagern,

eine Dichteerhöhung in den Farbentwicklerbildern an einer in einer Beförderungsrichtung eines Transfermediums, auf dem die Farbentwicklerbilder erzeugt sind, nachlaufenden Kante auftritt (Fig. 6A, Fig. 6B),
ein Zeitpunkt zum Detektieren der Kante der Farbentwicklerbilder im durch die Detektionseinrichtung erhaltenen Detektionsergebnis durch einen Detektionsfehler aufgrund der Dichterhöhung beeinflusst wird, und
die Steuereinrichtung dazu ausgebildet ist, eine Zentrumsposition der zwei Farbentwicklerbilder einer selben Farbe und eine Zentrumsposition des einen schwarzen Entwicklerbildes basierend auf dem durch die Detektionseinrichtung detektierten Detektionsergebnis zu erhalten und durch Erhalten eines Positionsabweichungsbetrags basierend auf der Zentrumsposition der zwei Farbentwicklerbilder der gleichen Farbe und einer Zentrumsposition des einen schwarzen Entwicklerbildes den Detektionsfehler zu korrigieren.

2.  Bilderzeugungsvorrichtung nach Anspruch 1, wobei, falls beim Erzeugen des Positionsabweichungskorrekturmusters eine relative Positionsabweichung zwischen dem einen schwarzen Entwicklerbild und den zwei Farbentwicklerbildern der gleichen Farbe nicht auftritt, die Steuereinrichtung dazu ausgebildet ist, die Bilderzeugungseinrichtung zu veranlassen, die zwei Farbentwicklerbilder der gleichen Farbe und das eine schwarze Entwicklerbild so zu erzeugen, dass sie einander im Positionsabweichungskorrekturmuster nicht überlagern.

3.  Bilderzeugungsvorrichtung nach Anspruch 1 oder 2, wobei, falls beim Erzeugen des Positionsabweichungskorrekturmusters eine relative Positionsabweichung zwischen dem einen schwarzen Entwicklerbild und den zwei Farbentwicklerbildern der gleichen Farbe auftritt, die Steuereinrichtung dafür ausgebildet ist, die Bilderzeugungseinrichtung zu veranlassen, das Positionsabweichungskorrekturmuster so zu erzeugen, dass eine Breite der im Farbentwicklerbild auftretenden Dichteerhöhung größer sein wird als eine Breite der Überlagerung einer jeweiligen der zwei Farbentwicklerbilder der gleichen Farbe und des einen schwarzen Entwicklerbildes im Positionsabweichungskorrekturmuster.

4.  Bilderzeugungsvorrichtung nach einem der Ansprüche 1 bis 3, wobei die Steuereinrichtung konfiguriert ist, basierend auf dem durch die Detektionseinrichtung detektierten Detektionsergebnis Positionsabweichungsbeträge der Entwicklerbilder anderer Farben hinsichtlich eines Entwicklerbildes einer vorbestimmten Referenzfarbe zu berechnen, und die Positionsabweichungskorrektur basierend auf den Positionsabweichungsbeträgen durchzuführen.

5.  Bilderzeugungsvorrichtung nach Anspruch 4, wobei die Steuereinrichtung konfiguriert ist, die Positionsabweichungsbeträge entsprechend einem durch Verdoppeln einer Differenz der Zentrumsposition zwischen dem Entwicklerbild der vorbestimmten Referenzfarbe und den Entwicklerbildern der anderen Farben erhaltenen Wert zu berechnen.

6.  Bilderzeugungsvorrichtung nach Anspruch 4, wobei die Steuereinrichtung konfiguriert ist, die Positionsabweichungsbeträge unter Verwendung einer Korrekturtabelle gemäß der Differenz einer Zentrumsposition zwischen dem Entwicklerbild der vorbestimmten Referenzfarbe und den Entwicklerbildern der anderen Farben zu berechnen.

7.  Bilderzeugungsvorrichtung nach einem der Ansprüche 1 bis 6, wobei die Steuereinrichtung konfiguriert ist, die Bilderzeugungseinrichtung zu veranlassen, das Positionsabweichungskorrekturmuster so zu erzeugen, dass ein schwarzes Entwicklerbild zwischen Farbentwicklerbildern einer ersten Farbe angeordnet ist und ein schwarzes Entwicklerbild zwischen Farbentwicklerbildern einer von der ersten Farbe verschiedenen, zweiten Farbe nicht angeordnet ist.

8.  Bilderzeugungsvorrichtung nach einem der Ansprüche 1 bis 7, wobei die Steuereinrichtung konfiguriert ist, die Bilderzeugungseinrichtung zu veranlassen, das Positionsabweichungskorrekturmuster so zu erzeugen, dass ein Abstand zwischen den zwei Farbentwicklerbildern der gleichen Farbe und eine Breite des schwarzen Entwicklerbildes im Wesentlichen gleich sind.

9.  Bilderzeugungsvorrichtung nach Anspruch 7, wobei durch Bestimmen der Farbentwicklerbilder einer ersten Farbe als Referenzfarbe die Steuereinrichtung einen Positionsabweichungsbetrag des anderen Farbentwicklerbildes hinsichtlich der Referenzfarbe berechnet und die Positionsabweichungskorrektur basierend auf dem Positionsabweichungsbetrag durchführt.

**Revendications**

1. Appareil de formation d'images (201), comprenant :

   un moyen de formation d'images configuré pour former un modèle de correction d'écart de position (305) comprenant des images de développateurs d'une pluralité de couleurs ;
   un moyen de détection (225) configuré pour émettre de la lumière vers le modèle de correction d'écart de position formé par le moyen de formation d'images et pour détecter de la lumière réfléchie à partir du modèle de correction d'écart de position ; et
   un moyen de commande (206) configuré pour exécuter une correction d'écart de position sur la base du résultat détecté par le moyen de détection,
   **caractérisé en ce que** le moyen de commande est configuré pour amener le moyen de formation d'images à former le modèle de correction d'écart de position de façon à disposer une image de développateur noir entre deux images de développateurs couleurs d'une même couleur, et dans un cas dans lequel un écart de position relative se produit entre ladite image de développateur noir et les deux images de développateurs couleurs de la même couleur lors de la formation du modèle de correction d'écart de position, le moyen de commande est configuré pour amener le moyen de formation d'images à former le modèle de correction d'écart de position de façon à superposer l'une sur l'autre l'une des deux images de développateurs couleurs de la même couleur et de ladite image de développateur noir,
   un balayage des images de développateurs couleurs se produit au niveau d'un bord aval, dans un sens de transport d'un support de transfert sur lequel sont formées les images de développateurs couleurs, (fig. 6a, fig. 6b) une temporisation permettant de détecter le bord des images de développateurs couleurs dans le résultat détecté obtenu par le moyen de détection est affectée par une erreur de détection due au balayage, et
   le moyen de commande est conçue pour obtenir une position centrale des deux images de développateurs couleurs d'une même couleur et une position centrale de ladite image de développateur noir sur la base du résultat détecté par le moyen de détection, et pour supprimer une erreur de détection par une obtention d'une quantité d'écart de position sur la base de la position centrale des deux images de développateurs couleurs de la même couleur et d'une position centrale de ladite image de développateur noir.

2. Appareil de formation d'images selon la revendication 1, dans lequel, dans un cas dans lequel il n'y a pas d'écart de position relative entre l'image de développateur noir et les deux images de développateurs couleurs de la même couleur lors de la formation du modèle de correction d'écart de position, le moyen de commande est conçu pour amener le moyen de formation d'images à former les deux images de développateurs couleurs de la même couleur et ladite image de développateur noir de façon à ne pas les superposer les unes sur les autres dans le modèle de correction de d'écart de position.

3. Appareil de formation d'images selon la revendication 1 ou 2, dans lequel, dans un cas dans lequel il y a un écart de position relative entre ladite image de développateur noir et les deux images de développateurs couleurs de la même couleur lors de la formation du modèle de correction d'écart de position, le moyen de commande est conçu pour amener le moyen de formation d'images à former le modèle de correction d'écart de position de sorte qu'une largeur de balayage se produisant dans l'image de développateur couleur soit plus grande qu'une largeur de superposition de l'une ou de l'autre des deux images de développateurs couleurs de la même couleur et de ladite image de développateur noir dans le modèle de correction de d'écart de position.

4. Appareil de formation d'images selon l'une quelconque des revendications 1 à 3, dans lequel le moyen de commande est configuré pour calculer, sur la base du résultat de détection détecté par le moyen de détection, des quantités d'écart de position des images de développateurs d'autres couleurs par rapport à une image de développateur d'une couleur de référence prédéterminée, et pour exécuter la correction d'écart de position sur la base des quantités d'écart de position.

5. Appareil de formation d'images selon la revendication 4, dans lequel le moyen de commande est configuré pour calculer les quantités d'écart de position correspondant à une valeur acquise par un doublage d'une différence de position centrale entre l'image de développateur de la couleur de référence prédéterminée et les images de développateurs des autres couleurs.

**6.** Appareil de formation d'images selon la revendication 4, dans lequel le moyen de commande est configuré pour calculer les quantités d'écart de position au moyen d'une table de correction conformément à la différence de position centrale entre l'image de développateur de la couleur de référence prédéterminée et les images de développateurs des autres couleurs.

**7.** Appareil de formation d'images selon l'une quelconque des revendications 1 à 6, dans lequel le moyen de commande est configuré pour amener le moyen de formation d'images à former le modèle de correction d'écart de position de façon à disposer une image de développateur noir entre des images de développateurs couleurs d'une première couleur et à ne pas disposer d'images de développateur noir entre des images de développateur couleur d'une seconde couleur différente de la première couleur.

**8.** Appareil de formation d'images selon l'une quelconque des revendications 1 à 7, dans lequel le moyen de commande est configuré pour amener le moyen de formation d'images à former le modèle de correction d'écart de position de sorte qu'un intervalle entre les deux images de développateurs couleurs de la même couleur et une largeur de l'image de développateur noir soient sensiblement égaux l'un à l'autre.

**9.** Appareil de formation d'images selon la revendication 7, dans lequel, en déterminant les images de développateurs couleurs d'une première couleur en tant que couleur de référence, le moyen de commande calcule une quantité d'écart de position de l'autre image de développateur couleur par rapport à la couleur de référence et exécute la correction d'écart de position sur la base de la quantité d'écart de position.

FIG.1

# FIG.2

# FIG.3

# FIG.4A

TOP VIEW OF
POSITIONAL DEVIATION
CORRECTION PATTERN

# FIG.4B

SECTIONAL VIEW OF
POSITIONAL DEVIATION
CORRECTION PATTERN

501y1  501k  W  D  501y2  501k  501m1 501m2  501k  501c1 501c2  502k  502c1 502c2  502k  502m1 502m2  502k  502y1 502y2

EP 2 687 909 B1

# FIG.5

PL6     PR6

PL5     PR5

PL4     PR4

PL3     PR3

PL2     PR2

PL1     PR1

PATTERN
CONVEYANCE
DIRECTION

*301*     *302*

## FIG.6A
### TOP VIEW OF POSITIONAL DEVIATION CORRECTION PATTERN

SWEEPING PORTION

## FIG.6B
### SECTIONAL VIEW OF POSITIONAL DEVIATION CORRECTION PATTERN

## FIG.6C
### ANALOG OUTPUT SIGNAL

VOLTAGE

TIME

## FIG.6D
### DIGITAL OUTPUT SIGNAL

VOLTAGE

ty11  tky11 tky12  ty12      tm11 tkm11 tkm12  tm12      tc11  tkc11 tkc12  tc12   TIME

EP 2 687 909 B1

## FIG.7A
TOP VIEW OF
POSITIONAL DEVIATION
CORRECTION PATTERN

SWEEPING
PORTION

## FIG.7B
SECTIONAL VIEW OF
POSITIONAL DEVIATION
CORRECTION PATTERN

## FIG.7C
ANALOG
OUTPUT SIGNAL

VOLTAGE

TIME

## FIG.7D
DIGITAL
OUTPUT SIGNAL

VOLTAGE

ty11  tky11 tky12  ty12    tm11 tkm11 tkm12  tm12    tc11  tkc11 tkc12  tc12  TIME

EP 2 687 909 B1

# FIG.8A
### TOP VIEW OF POSITIONAL DEVIATION CORRECTION PATTERN

SWEEPING PORTION

# FIG.8B
### SECTIONAL VIEW OF POSITIONAL DEVIATION CORRECTION PATTERN

# FIG.8C
### ANALOG OUTPUT SIGNAL

VOLTAGE

TIME

# FIG.8D
### DIGITAL OUTPUT SIGNAL

VOLTAGE

ty11  tky11 tky12  ty12        tm11 tkm11 tkm12  tm12        tc11  tkc11 tkc12   tc12   TIME

EP 2 687 909 B1

## FIG.9A
TOP VIEW OF
POSITIONAL DEVIATION
CORRECTION PATTERN

## FIG.9B
SECTIONAL VIEW OF
POSITIONAL DEVIATION
CORRECTION PATTERN

501y1 501y2 501m1 501m2 501c1 501c2
501k 501k 501k

502c1 502c2 502m1 502m2 502y1 502y2
502k 502k 502k

## FIG.9C
DIGITAL
OUTPUT SIGNAL

tyk1
ty1
ty11 tky11 tky12 ty12

tmk1
tm1
tm11 tkm11 tkm12 tm12

tck1
tc1
tc11 tkc11 tkc12 tc12

tck2
tc2
ty21 tky21 tky22 ty22

tmk2
tm2
tm21 tkm21 tkm22 tm22

tyk2
ty2
tc21 tkc21 tkc22 tc22

# FIG.10A
**TOP VIEW OF POSITIONAL DEVIATION CORRECTION PATTERN**

# FIG.10B
**SECTIONAL VIEW OF POSITIONAL DEVIATION CORRECTION PATTERN**

501y1
501k
501y2
501m
501c
502c
502m
502y1
502y2
502k

W
D

EP 2 687 909 B1

EP 2 687 909 B1

SWEEPING
PORTION

**FIG.11A**
TOP VIEW OF
POSITIONAL DEVIATION
CORRECTION PATTERN

**FIG.11B**
SECTIONAL VIEW OF
POSITIONAL DEVIATION
CORRECTION PATTERN

VOLTAGE

**FIG.11C**
ANALOG
OUTPUT SIGNAL

TIME

VOLTAGE

**FIG.11D**
DIGITAL
OUTPUT SIGNAL

ty11  tk11  tk12  ty12      tm11 tm12      tc11  tc12  TIME

## FIG.12A
TOP VIEW OF
POSITIONAL DEVIATION
CORRECTION PATTERN

SWEEPING
PORTION

## FIG.12B
SECTIONAL VIEW OF
POSITIONAL DEVIATION
CORRECTION PATTERN

## FIG.12C
ANALOG
OUTPUT SIGNAL

VOLTAGE

TIME

## FIG.12D
DIGITAL
OUTPUT SIGNAL

VOLTAGE

ty11  tk11  tk12  ty12  tm11  tm12  tc11  tc12  TIME

EP 2 687 909 B1

EP 2 687 909 B1

SWEEPING
PORTION

## FIG.13A

TOP VIEW OF
POSITIONAL DEVIATION
CORRECTION PATTERN

## FIG.13B

SECTIONAL VIEW OF
POSITIONAL DEVIATION
CORRECTION PATTERN

## FIG.13C

ANALOG
OUTPUT SIGNAL

VOLTAGE

TIME

## FIG.13D

DIGITAL
OUTPUT SIGNAL

VOLTAGE

ty11  tk11  tk12  ty12    tm11  tm12    tc11  tc12  TIME

# FIG.14A

**TOP VIEW OF POSITIONAL DEVIATION CORRECTION PATTERN**

# FIG.14B

**SECTIONAL VIEW OF POSITIONAL DEVIATION CORRECTION PATTERN**

$501y1$ $501y2$ $501m$ $501c$ $502c$ $502m$ $502y1$ $502y2$

$501k$ $502k$

# FIG.14C

**DIGITAL OUTPUT SIGNAL**

$ty1$ $ty2$

$tk1$ $tm1$ $tc1$ $tc2$ $tm2$ $tk2$

$ty11$ $tk11$ $tk12$ $ty12$ $tm11$ $tm12$ $tc11$ $tc12$ $tc21$ $tc22$ $tm21$ $tm22$ $ty21$ $tk21$ $tk22$ $ty22$

EP 2 687 909 B1

# FIG.15A

TOP VIEW OF
POSITIONAL DEVIATION
CORRECTION PATTERN

# FIG.15B

SECTIONAL VIEW OF
POSITIONAL DEVIATION
CORRECTION PATTERN

*1601*

*1604*

*1602*

*1603*

EP 2 687 909 B1

# FIG.16

*1701*

*1703*

*1704*

*1702*

# FIG.17

*1801*

**FIG.18A**

TOP VIEW OF
POSITIONAL DEVIATION
CORRECTION PATTERN

*1902*

SWEEPING
PORTION

*1901*

SWEEPING
PORTION

**FIG.18B**

SECTIONAL VIEW OF
POSITIONAL DEVIATION
CORRECTION PATTERN

**FIG.18C**

ANALOG
OUTPUT SIGNAL

VOLTAGE

THRESHOLD
VOLTAGE

TIME

**FIG.18D**

DIGITAL
OUTPUT SIGNAL

VOLTAGE

ty11  tk11  tk12  ty12  TIME

**FIG.18E**

THERE IS NO
SWEEPING

Δdy

**FIG.18F**

THERE IS
SWEEPING

Δdy'

**EP 2 687 909 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009093155 A
- JP 2007272111 A
- EP 2388652 A